# EUROPÄISCHE PATENTSCHRIFT

(11) **EP 4 275 952 B1**
(45) Veröffentlichungstag und Bekanntmachung des Hinweises auf die Patenterteilung: **16.09.2026**
(21) Anmeldenummer: 22172857.9
(22) Anmeldetag: 11.05.2022
(51) Int. Cl.: B60P 1/64, B65D 88/00

(54) **TRANSPORTSYSTEM, UMFASSEND FAHRZEUG UND TRANSPORT- UND QUARANTÄNEBEHÄLTER**
TRANSPORT SYSTEM COMPRISING A VEHICLE AND A TRANSPORT AND QUARANING CONTAINER
SYSTÈME DE TRANSPORT COMPRENANT UN VÉHICULE ET UN RÉCIPIENT DE TRANSPORT ET DE QUARANTAINE

(43) Veröffentlichungstag der Anmeldung: 15.11.2023
(73) Patentinhaber: Ellermann Eurocon GmbH, 27751 Delmenhorst (DE)
(72) Erfinder: ELLERMANN, Wenzeslaus, 27755 Delmenhorst (DE)
(74) Vertreter: Eisenführ Speiser

(56) Entgegenhaltungen:
- WO-A1-01/70597
- CN-B- 107 406 023
- DE-A1- 102011 056 004
- DE-U1- 202009 010 748
- DE-U1- 29 514 716
- JP-A- 2003 312 774
- US-A1- 2013 146 603
- US-A1- 2021 331 010

## Beschreibung

Die Erfindung betrifft ein Gefahrgut-Transportsystem, umfassend ein Fahrzeug mit einer Ladefläche, und mehrere auf der Ladefläche anordenbare Transport- und Quarantänebehälter gemäß den Merkmalen des Oberbegriffs von Anspruch 1.

Im Stand der Technik sind Behälter zum Aufnehmen von Gefahrgut bekannt, mittels derer Gefahrgüter gelagert und transportiert und während der Lagerung und des Transports mögliche an dem Gefahrgut austretende Gefahrstoffe innerhalb des Behälters zurückgehalten werden können.

WO 2014/194876 A1 zeigt ein Sicherheitsbehältnis für Gefahrgüter, das aus einem Außenkompartiment und einem Innenkompartiment für das aufzunehmende Gefahrgut gebildet wird. Das Außenkompartiment weist einen Deckel auf, über den ein Zugang in das Innere des Außenkompartiments ausgebildet ist.

Mit zunehmender Bedeutung der Elektromobilität nimmt die Anzahl der Fahrzeuge mit Akkumulator sowie die Notwendigkeit eines Austauschs von Fahrzeug-Akkumulatoren bei der Instandhaltung und Wartung von Kraftfahrzeugen stetig zu. Fahrzeug-Akkumulatoren müssen während des Transportes und der Lagerung entsprechend geschützt aufbewahrt werden. Speziell der Transport in Transport- und Quarantänebehältern stellt den Spediteur vor gewisse Herausforderungen, wenn er auf effiziente Weise durchgeführt werden soll.

JP 2003-312774 A zeigt einen Abfallbehälter für den Transport von Abfällen, die gefährliche Stoffe enthalten. Der Behälter weist einen Behälterboden, Seitenwände und eine Behälterdecke auf, wobei die Behälterdecke über nahezu die gesamte Fläche als abnehmbarer Deckel ausgebildet ist, sodass beispielsweise Abfallfässer von oben im Behälterinneren positioniert werden können.

DE 20 2009 010 748 U1 offenbart einen Behälter zum Transport von Gefahrgütern. Der Transportbehälter weist eine Auffangwanne und einen darauf abgestellten nach unten offenen Aufnahmebehälter auf. Zwischen Aufnahmebehälter und Auffangwanne ist ein Gitterrost für das darauf abzustellende Gefahrgut angeordnet. Der Aufnahmebehälter weist wenigstens eine Be- und Entladeöffnung auf, welche durch ein schwenkbar angelenktes Verschlusselement abgedeckt werden kann.

Der Erfindung lag daher die Aufgabe zugrunde, ein Transportsystem, umfassend ein Fahrzeug und ein oder mehrere auf der Ladefläche angeordnete Transport- und Quarantänebehälter anzugeben, mit denen der Transport und auch die Lagerung des transportierten Gefahrgutes auf sichere Weise möglich ist. Zudem sollen sich mehrere solcher Transport- und Quarantänebehälter effizient und platzsparend auf der Ladefläche eines Fahrzeuges anordnen lassen.

Die Erfindung löst die ihr zugrundeliegende Aufgabe bei einem Transportsystem mit den Merkmalen von Anspruch 1. Insbesondere weist der Behälter auf seiner Innenseite zumindest abschnittsweise eine isolierende und/oder feuerhemmende Auskleidung auf.

Mittels eines derartig erfindungsgemäß ausgebildeten Transportsystems ist ein platzsparender und damit effizienter Transport von Behältern auf einer Ladefläche eines Fahrzeuges möglich. Durch das Anpassen der Grundfläche des Behälters an die Ladefläche des Fahrzeuges kann die Ladefläche optimal ausgenutzt werden. Vorzugsweise können durch die erfindungsgemäße Ausgestaltung des Transportsystems mehr Gefahrgüter, wie beispielsweise Fahrzeug-Akkumulatoren, als üblich auf einer Ladefläche transportiert werden.

Vorzugsweise weist die Ladefläche des Fahrzeuges wie auch die Grundfläche eines Behälters eine im Wesentlichen rechteckige Grundform auf. Im Sinne der vorliegenden Erfindung ist unter der Definition, dass "die erste und/oder zweite Seitenlänge einem ganzzahligen Teiler des Längen- und Breitenmaßes der Ladefläche entspricht", zu verstehen, dass die Ladefläche bezogen auf ihr Längen- und/oder Breitenmaß ein geringfügiges Übermaß haben kann, um neben einer ausreichend großen Aufstandsfläche für den Behälter auch eine Ladungssicherung auf der Ladefläche gewährleisten zu können.

Vorliegend können das Längen- und Breitenmaß der Ladefläche in Vergleich zu einer der Seitenlänge oder den aufsummierten Seitenlängen mehrerer Behälter ein Übermaß haben, das nicht größer ist als 5 % der einen Seitenlänge oder der aufsummierten Seitenlängen.

Eine Weiterbildung des erfindungsgemäßen Transportsystems sieht vor, dass die erste Seitenlänge der Grundfläche, bezogen auf das Breitenmaß der Ladefläche, einen Teiler von 1 und die zweite Seitenlänge der Grundfläche, bezogen auf das Längenmaß der Ladefläche, einen Teiler von mindestens 3 aufweist, sodass auf der Ladefläche eine Reihe von mehreren, vorzugsweise drei, vier oder fünf hintereinander angeordneten Behältern anordenbar ist. Insbesondere entspricht die erste Seitenlänge der Abmessung des Behälters in seiner Längsrichtung.

Die erste Seitenlänge verläuft somit parallel zur Längsseite des erfindungsgemäßen Behälters und bildet vorzugsweise das größte Außenabmaß des Behälters.

Die zweite Seitenlänge entspricht vorzugsweise der Abmessung des Behälters in seiner Tiefenrichtung. Die zweite Seitenlänge verläuft insbesondere parallel zur Stirnseite des Behälters und weist ein Abmaß auf, das geringer ist als das Abmaß des Behälters in Längsrichtung.

Die erfindungsgemäßen Behälter sind vorzugsweise im Verladezustand auf der Ladefläche mit ihrer ersten Seitenlänge parallel zum Breitenmaß der Ladefläche des TransportFahrzeuges ausgerichtet.

Gemäß einer bevorzugten Ausgestaltung des Transportsystems weist die zweite Seitenlänge der Grundfläche, bezogen auf das Breitenmaß der Ladefläche, einen Teiler von 2 und die erste Seitenlänge der Grundfläche, bezogen auf das Längenmaß der Ladefläche, einen Teiler von mindestens 2 auf, sodass auf der Ladefläche zwei aneinander angrenzende Reihen von zwei oder mehr hintereinander angeordneten Behältern anordenbar sind. In Breitenrichtung des Fahrzeuges sind insbesondere zwei Behälter hintereinander angeordnet, wobei die hintereinander angeordneten Behälter, insbesondere deren aufsummierten zweiten Seitenlängen, ein Gesamtmaß aufweisen, das im Wesentlichen dem Breitenmaß der Ladefläche entspricht. Da die Ladeflächen der heutzutage zum Einsatz kommenden Transport-Fahrzeuge standardisierte Abmessungen haben, kann der Transport von darauf in ihren Abmessungen abgestimmten Behältern mit einem beliebigen Transport-Fahrzeug, ohne die Notwendigkeit des Einsatzes von Fahrzeugen mit speziell angepassten Ladeflächen, durchgeführt werden. Die erfindungsgemäßen Behälter verlaufen im Verladezustand auf der Ladefläche des Fahrzeuges mit ihrer ersten Seitenlänge parallel zum Längenmaß der Ladefläche des Fahrzeuges. Mit dieser Ausrichtung der Behälter auf der Ladefläche des Fahrzeuges können in Abhängigkeit von den gewählten Seitenlängen zwei Reihen mit zwei, drei oder vier Behältern in einer Ebene auf der Ladefläche des Fahrzeuges angeordnet werden.

Eine Weiterbildung des Transportsystems sieht vor, dass der Behälter mehrere an Behälterboden und Behälterdecke angeordnete Positioniermittel zum Stapeln mehrerer Behälter in Ebenen übereinander aufweist. Mithilfe derartiger Positioniermittel können die Behälter übereinander gestapelt werden, ohne dass sich die Behälter zueinander bewegen. Leere sowie mit Gefahrgut beladene Behälter können mit einem deutlich verringerten Platzbedarf in mehreren Ebenen gelagert werden. Zudem kann auch der Transport von mehreren Behältern übereinander auf der Ladefläche eines Fahrzeuges erfolgen. Dazu ist das Höhenmaß der Behälter derart gewählt ist, dass zwei übereinander gestapelte Behälter eine Ladungshöhe haben, die geringer ist als die zulässige Ladehöhe auf der Ladefläche des Fahrzeuges. Durch die Stapelbarkeit der Behälter kann beim Transport der Behälter bevorzugt die doppelte Anzahl an Behältern mit oder auch ohne darin enthaltenem Gefahrgut transportiert werden.

Um eine Arretierung der Transportbehälter unmittelbar auf der Ladefläche des Fahrzeuges zu erzielen, kann die Ladefläche ihrerseits Aufnahmen oder Halterungen aufweisen, die bevorzugt mit am Behälterboden angeordneten Positioniermitteln zusammenwirken. Damit ist einem ungewollten Bewegen der Behälter auch auf der Ladefläche des Fahrzeuges entgegengewirkt.

Vorzugsweise ist ein Positioniermittel an der Behälterdecke ausgebildet, vorzugsweise als, insbesondere senkrecht, nach außen abstehendes Verrastteil und/oder ein Positioniermittel ist am Behälterboden als eine mit dem Verrastteil korrespondierende Aufnahme ausgebildet, insbesondere an einem vom Behälterboden abstehenden Fuß.

Mittels der Verrastteile an der Behälterdecke eines ersten Behälters und den korrespondierenden Aufnahmen am Behälterboden eines zweiten Behälters, der auf den ersten Behälter gestapelt wird, ist vorzugsweise eine Formschlussverbindung bewirkt. Mithilfe der formschlüssig ineinandergreifenden Positioniermittel wird der Relativbewegung zweier übereinander gestapelter Behälter in der Ebene parallel zur Aufstellfläche für die Behälter entgegengewirkt. In einer Ausführungsform ist vorgesehen, dass die Aufnahmen am Behälterboden eines Behälters die Verrastteile an der Behälterdecke eines jeweils anderen Behälters zumindest abschnittsweise außenseitig umgreifen beziehungsweise mit diesen in Anlage gebracht werden.

Gemäß einer Weiterbildung des Transportsystems ist oberhalb des Behälterbodens zusätzlich mindestens ein Ladeboden als Aufnahmefläche für das Gefahrgut im Aufnahmeraum angeordnet, welcher vorzugsweise im Abstand zum Behälterboden angeordnet ist. Mithilfe des Ladebodens als Aufnahmefläche für das Gefahrgut ist unterhalb des Ladebodens ein Bereich ausgebildet, der zum Auffangen von z. B. aus dem Gefahrgut austretender Gefahrstoffe dient. Mögliche austretende Gefahrstoff werden sicher im Behälter zurückgehalten. In einer Ausführungsform der Erfindung ist vorgesehen, dass die Aufnahmefläche für das Gefahrgut im Wesentlichen auf Höhe der Verladekante am Behälter ausgebildet ist. Vorzugsweise weist eine der Seitenwände, welche die erste Seitenlänge für die Grundfläche und damit die Längsseite des Behälters definiert, ein feststehendes Wandteil auf, welches sich ausgehend vom Behälterboden um ein vorbestimmtes Maß senkrecht nach oben erstreckt und deren oberes Ende die Verladekante definiert. Diese Seitenwand wird ferner aus einem beweglichen, das Klappenteil zumindest teilweise definierenden Wandteil ausgebildet.

Gemäß einer bevorzugten Ausgestaltung ist der Ladeboden aus einem oder mehreren Gitterrosten ausgebildet. Austretende Gefahrstoffe werden in den Aufnahmebereich des Behälters unterhalb der Aufnahmefläche abgegeben. Ein dauerhafter Kontakt des Gefahrstoffes mit der Außenseite des Gehäuses, welches gegebenenfalls zu fortschreitenden Schäden am Gehäuse führt, wird damit vermieden. Vorzugsweise besteht die Aufnahmefläche aus mehreren Gitterrosten, die im Bedarfsfall separat voneinander aus dem Inneren des Behälters entnommen werden können. Die Anzahl der verwendeten Gitterroste kann in Abhängigkeit von der Größe der Grundfläche des Behälters variieren. Vorzugsweise weist der Behälter in einer Ausgestaltung drei in einer Ebene nebeneinander angeordnete Gitterroste auf.

Vorzugsweise weist der Behälter ein oder mehrere Anschlüsse zum Einleiten und/oder Abführen von Kühl- oder Löschmittel in den oder aus dem Aufnahmeraum auf. Mittels der am Behälter vorgesehenen Anschlüsse kann im Bedarfsfall ein Kühl- bzw. Löschmittel in das Innere des Behälters eingeleitet werden und vorzugsweise mit dem im Aufnahmeraum befindlichen Gefahrgut in Kontakt gebracht werden. Das in den Aufnahmeraum des Behälters eingeleitete Kühl- oder Löschmittel wird, nachdem es bevorzugt in Kontakt mit dem Gefahrgut gelangt ist, ebenfalls in dem vorzugsweise dafür ausgebildeten Aufnahmebereich zwischen dem Behälterboden und der Aufnahmefläche für das Gefahrgut gesammelt. Vorzugsweise weist der Behälter einen weiteren Anschluss auf, mittels dessen das Kühl- oder Löschmittel nach einem Kühl- oder Löschvorgang des Gefahrgutes im Behälter wieder aus diesem herausgeleitet werden kann.

Gemäß einer bevorzugten Ausgestaltung des Transportsystems ist vorgesehen, dass der mindestens eine Anschluss am Behälter in die Ebene einer zugeordneten Behälterwand zurückversetzt angeordnet ist. Der bzw. die Anschlüsse umfassen vorzugsweise eine Schlauchkupplung, vorzugsweise Storz-Kupplungen, zum Anschließen von Saug- und/oder Druckschläuchen. Mit dem Zurückversetzen der Anschlüsse ist bewirkt, dass die Schlauchkupplungen nicht an der insbesondere von den Seitenwänden begrenzten Außenseite des Behälters vorstehen. Damit sind Schäden an dem oder den Anschlüssen mit ihren Schlauchkupplungen durch einen Kontakt mit einem beispielsweise auf einer Ladefläche eines Fahrzeuges angrenzend anzuordnenden Behälter vermieden.

Mindestens einer der Anschlüsse ist am Behälter bodenseitig angeordnet und als Ablass für das Kühl- oder Löschmittel aus dem Behälter ausgebildet. Der bodenseitig angeordnete Anschluss am Behälter hat vorzugsweise eine Verbindung zum Aufnahmebereich des Behälters unterhalb der Aufnahmefläche (Ladeboden) für das Gefahrgut. Ein im Aufnahmebereich angesammeltes Kühl- oder Löschmittel kann über den bodenseitig angeordneten Anschluss, vorzugsweise allein aufgrund der wirkenden Schwerkraft, aus dem Inneren des Behälters abgelassen werden. Vorzugsweise ist der als Ablass ausgebildete Anschluss an der rückwärtigen Seitenwand des Behälters angeordnet, also an der Seitenwand des Behälters, die der Seitenwand gegenüberliegt, die zumindest teilweise das beweglich aufgenommene Klappenteil am Behälter ausbildet. Am Anschluss ist vorzugsweise ein Absperrorgan, wie ein Kugelhahn, zum Absperren und Freigeben des bodenseitigen Auslasses vorgesehen.

Gemäß einer bevorzugten Ausführungsform ist mindestens ein Anschluss am Behälter ausgehend vom Behälterboden auf mindestens der halben Höhe der Seitenwand angeordnet und als Einlass für das Kühl- oder Löschmittel in dem Behälter ausgebildet. Vorzugsweise ist der als Einlass verwendete Anschluss nahe der Behälterdecke des Behälters angeordnet, sodass ein in den Behälter eingeleitetes Kühl- oder Löschmittel bevorzugt direkt unterhalb der Behälterdecke über eine Austrittsöffnung in den Aufnahmeraum des Behälters eingeleitet und mit der Oberseite des Gefahrgutes im Behälter in Kontakt bringbar ist. Vorzugsweise ist der als Einlass ausgebildete Anschluss mit einer sich in den Aufnahmeraum des Behälters erstreckenden Fluidleitung verbunden, welche entlang ihrer Erstreckung mehrere Öffnungen als Löschdüsen zum gezielten Verteilen des Kühl- oder Löschmittels im Aufnahmeraum aufweisen kann.

Eine Weiterbildung des Transportsystems sieht vor, dass unterhalb des Ladebodens eine Auffangwanne für ein bzw. das in den Aufnahmeraum einleitbare(s) Kühl- oder Löschmittel ausgebildet ist. Die Ausgestaltung des Bereiches des Behälters unterhalb des Ladebodens als Auffangwanne stellt eine einfache Möglichkeit für einen sicheren Rückhalt etwaiger aus dem Gefahrgut austretender Gefahrstoffe oder eines über den Zugang in den Behälter eingeleiteten Lösch- oder Kühlmittels dar. Der Behälter weist einen fluiddicht geschlossenen Behälterboden mit sich im Wesentlichen senkrecht zum Behälterboden nach oben erstreckenden Seitenwänden bzw. Seitenwandabschnitten auf. Damit ist einem unbeabsichtigten Austreten von Gefahrstoffen oder Kühl- oder Löschmittel in die Umgebung entgegengewirkt. Um ein kontrolliertes Ablassen von Gefahrstoffen und/oder Kühl- bzw. Löschmittel aus der Auffangwanne am Behälter zu ermöglichen, ist der als Ablass ausgebildete Anschluss an der Auffangwanne vorgesehen.

Eine Weiterbildung des Transportsystems sieht vor, dass am Behälter zusätzlich ein Löschmittelreservoir vorgesehen ist, welches fluidleitend mit einer im Aufnahmeraum angeordneten Löschdüse verbunden ist. Mittels des Löschmittelreservoirs, auch bezeichnet als Löschgenerator, wird ein darin enthaltenes Löschmittel in den Aufnahmeraum des Behälters abgegeben und einem möglichen im Aufnahmeraum entstehenden Brandfall entgegengewirkt. Vorzugsweise ist innerhalb des Löschmittelreservoirs ein unter Druck stehendes Löschmittel aufgenommen, das nach Aktivierung in den Aufnahmeraum des Behälters strömt.

Vorzugsweise ist das Löschmittelreservoir dazu eingerichtet, mittels eines im Aufnahmeraum angeordneten Sensorelementes oder manuell von der Außenseite des Behälters aus aktiviert zu werden. Das Löschmittelreservoir weist insbesondere einen Ventilkörper auf, der in einer möglichen Ausführungsform der Erfindung mit einem thermisch aktivierbaren Sensorelement gekoppelt ist. In einer alternativen Ausgestaltung kann der Ventilkörper des Löschmittelreservoirs auch von Hand betätigt werden, zum Beispiel mittels Seilzug. Mit Bewegen des Ventilkörpers in seine Offenstellung wird die Verbindung vom Löschmittelreservoir zum Aufnahmeraum des Behälters freigegeben.

Gemäß einer möglichen Ausgestaltung des Transportsystems sind an der Außenseite der Behälterwände ein oder mehrere Verladehilfen zum Angreifen von Anschlag-, Lastaufnahme- oder Tragmitteln vorgesehen, welche als Staplertaschen, Anschlagösen oder Verladeaufnahmen ausgebildet sind. Mittels der Verladehilfen ist eine sichere Kopplung mit einer Verladeeinrichtung, wie beispielsweise einem Verladekran eines Fahrzeuges oder einem Gabelstapler möglich. Das Verladen eines Behälters auf z. B. einer Ladefläche eines Fahrzeuges oder das Stapeln mehrerer Behälter übereinander auf einer Fahrzeug-Ladefläche oder an einem dafür vorgesehenen Lagerort ist damit vereinfacht. An dem Behälter sind durch die Verladehilfen spezielle Angriffspunkte für die daran angreifende Verladekraft vorgesehen, über die mit Anheben des Behälters und der dann wirkenden Gewichtskraft zudem eine gleichmäßige Krafteinleitung/Kräfteverteilung in die Behälterstruktur erfolgt.

In einer bevorzugten Ausführungsform bilden die an den Behälterwänden des Behälters angeordneten Verladehilfen Anschlagflächen für zwei zueinander benachbart und vorzugsweise aneinander angrenzend anzuordnende Behälter aus. Die Verladehilfen definieren vorzugsweise somit einzuhaltende Mindestabstandsmaße zweier Behälter zueinander, was zum einen das Verladen weiter vereinfacht. In einem möglichen Brandfall wird zu anderen der Kontakt zwischen zueinander benachbart angeordneten Behältern auf einen geringen Flächenbereich begrenzt, sodass eine übermäßige Übertragung von Wärme von einem Behälter auf einen benachbart angeordneten Behälter und damit das Übertragen eines Brandes von einem Behälter auf den Benachbarten vermieden ist.

Vorzugsweise weist mindestens eine der Seitenwände eine öffen- und verschließbare Entlüftungsöffnung auf, wodurch ein mögliches in den Aufnahmeraum des Behälters eingeleitetes gasförmiges Löschmittel vor dem Öffnen des Behälters über die Entlüftungsöffnung kontrolliert herausgeleitet werden kann. Auch die Entlüftungsöffnung weist vorzugsweise einen Anschluss für beispielsweise eine Luftleitung auf, um das Löschmittel und mögliche im Aufnahmeraum befindliche Rauchgase gezielt abzusaugen. Die Entlüftungsöffnung kann beispielsweise eine auf Schwerkraft basierende selbstschließende Jalousie umfassen oder mit einer Lüftungsrosette ausgerüstet sein, welche durch Verstellen des insbesondere drehbar aufgenommenen Verschlusskörpers an der Lüftungsrosette von einer Schließ- in eine Offenstellung und umgekehrt bringbar ist.

In einer bevorzugten Ausgestaltung weist der Behälter eine definierte Bauhöhe H auf, sodass zwei auf der Ladefläche des Fahrzeuges übereinandergestapelte Behälter eine Ladungshöhe L haben, die im Verladezustand der Behälter unterhalb der zulässigen Ladehöhe des Fahrzeuges liegt. Durch die Berücksichtigung der zulässigen Ladehöhe bei der Ausgestaltung der Bauhöhe H des Behälters ist zumindest eine Verdopplung der Anzahl der auf einer Ladefläche eines Fahrzeuges zu transportierenden Behälter möglich.

In einer Ausgestaltung der Erfindung ist vorgesehen, dass die Bauhöhe H der Behälter derart gewählt ist, dass auf der Ladefläche 4 eines Fahrzeuges 2 bis zu drei übereinander gestapelte Ebenen an Behältern transportiert werden können.

Gemäß einer Weiterbildung der Erfindung bildet das Klappenteil Wandbereiche der frontseitigen Seitenwand und der Behälterdecke des Behälters aus. Mit der Ausgestaltung des Klappenteiles in Wandbereichen von frontseitiger Seitenwand und Behälterdecke ist ein bevorzugt großzügiger Zugang zum Inneren bzw. dem Aufnahmeraum des Behälters erzeugt. Auch Gefahrgüter, die nahezu die Innenabmessungen des Aufnahmeraums im Behälter haben, können über einen solchen Zugang in den Aufnahmeraum des Behälters überführt werden oder auch wieder daraus entnommen werden.

Gemäß einer Ausführungsform weist das Klappenteil zwei senkrecht zueinander verlaufende, starr miteinander verbundene Plattenteile auf, welche vorzugsweise mittels eines parallel zur Behälterdecke verlaufenden Schwenklagers an selbiger angelenkt sind. Das Vorsehen von zwei fest zueinander ausgerichteten Plattenteilen stellt eine konstruktiv günstige Möglichkeit der Ausgestaltung eines vergleichsweise großen Zugangs zum Aufnahmeraum dar, wenn das Klappenteil in seine Offenstellung überführt ist.

Durch die starre Verbindung der Plattenteile untereinander ist bewirkt, dass die Plattenteile vollständig aus dem Zugang für den Aufnahmeraum des Behälters herausbewegt werden. Das Einbringen bzw. Entnehmen von Gefahrgut in den Aufnahmeraum des Behälters ist weiter erleichtert.

Mittels der fest zueinander ausgerichteten Plattenteile werden jeweils nur Flächenbereiche von Behälterdecke und frontseitiger Seitenwand des Behälters ausgebildet. Das Klappenteil erstreckt sich vorzugsweise über mehr als die Hälfte, weiter vorzugsweise über mehr als zwei Drittel, besonders bevorzugt über 80% oder mehr, der Breite des Behälters.

Das Plattenteil, mit dem die Behälterdecke verschlossen wird, erstreckt sich vorzugsweise über mehr als ein Drittel, weiter vorzugsweise über die Hälfte oder mehr, der Tiefe des Behälters. Ein wesentlicher Teil der Behälterdecke wird so aus einem der Plattenteile des Klappenteiles gebildet. Die frontseitige Seitenwand wird ebenso zu einem wesentlichen Teil aus dem in der Schließstellung des Klappenteiles senkrecht verlaufenden Plattenteil gebildet.

Gemäß einer Weiterbildung weist der Behälter mindestens eine mit dem Klappenteil zusammenwirkende Öffnungshilfe auf, die dazu eingerichtet ist, zumindest das Öffnen des Klappenteiles zu unterstützen. Mithilfe der Öffnungshilfe, welche in einer möglichen Ausgestaltung als Federdämpferelement ausgebildet sein kann, muss eine Person zum Öffnen des Behälters nur eine verringerte Kraft aufbringen. In einer weiteren bevorzugten Ausführungsform ist die Öffnungshilfe dazu eingerichtet, das Klappenteil in seiner Offenstellung zu halten. Damit wird vermieden, dass sich das Klappenteil ungewollt aus der Offenstellung in die Schließstellung bewegt.

In einer bevorzugten Ausgestaltung weist das Klappenteil auf seiner dem Aufnahmeraum des Behälters zugewandten Innenseite ein Dichtelement auf, mittels dessen beispielsweise beim Bewegen des Behälters das Austreten von etwaigem sich im Auffangbereich unterhalb der Aufnahmefläche befindlichen Kühl- oder Löschmittel aus dem Behälterinneren erschwert oder verhindert wird.

Vorzugsweise sind in einer Ausgestaltung des Transportsystems am Behälter ein oder mehrere Verriegelungen in Form eines Verriegelungshakens und/oder eines Spannverschlusses an den Seitenwänden oder dem Klappenteil angeordnet bzw. ausgebildet, welche dazu eingerichtet sind, das Klappenteil in seiner Schließstellung zu arretieren.

Erfindungsgemäß weist der Behälter auf seiner den Aufnahmeraum begrenzenden Innenseite zumindest abschnittsweise eine thermisch isolierende und/oder feuerhemmende Auskleidung auf. Im Brandfall des Gefahrgutes kann damit eine kritische Temperarturerhöhung an der Außenseite des Behälters und damit das Ausbreiten eines Brandes, etwa auf benachbart angeordnete Behälter des Transportsystems, vermieden werden.

Vorzugsweise sind wenigstens die Behälterdecke und die senkrecht verlaufenden Seitenwände des Behälters, weiter bevorzugt auch das Klappenteil des Behälters, innenseitig mit der Auskleidung versehen. Der Behälterboden als Teil der Auffangwanne für das Kühl- oder Löschmittel kann frei von der Auskleidung bleiben, oder alternativ ebenfalls ausgekleidet sein. Als Material für die Auskleidung kann zum Beispiel Mineralwolle verwendet werden, welche eine Feuerwiderstandsklasse nach DIN 4102 von mindestens F30 hat, vorzugsweise von F60 oder höher, besonders bevorzugt F90 oder höher.

Die Erfindung wurde vorstehend in einem ersten Aspekt unter Bezugnahme auf das Transportsystem als Ganzes beschrieben. Die Erfindung betrifft ferner in einem weiteren Aspekt einen Transport- und Quarantänebehälter für ein Transportsystem nach dem ersten Aspekt, wobei das System ein Fahrzeug mit einer Ladefläche mit einem Längen- und Breitenmaß aufweist.

Die Erfindung löst die eingangs bezeichnete Aufgabe in Bezug auf den zweiten Aspekt, indem der Behälter einen Behälterboden, mehrere Seitenwände und eine Behälterdecke aufweist, welche einen Aufnahmeraum für das Gefahrgut definieren, und wobei der Behälter ein bewegliches Klappenteil als Zugang zum Aufnahmeraum aufweist, und indem der Behälter dazu eingerichtet ist, mit weiteren baugleichen Behältern aneinander angrenzend auf einer Ladefläche angeordnet zu werden, wobei die Behälter jeweils eine Grundfläche mit einer ersten und einer zweiten Seitenlänge aufweisen, wobei die erste und/oder zweite Seitenlänge jeweils einem ganzzahligen Teiler des Längen- und/oder Breitenmaßes der Ladefläche entspricht, und wobei der Behälter auf seiner Innenseite zumindest abschnittsweise eine isolierende und/oder feuerhemmende Auskleidung aufweist.

Der Behälter macht sich dieselben Vorteile zunutze wie das Transportsystem des ersten Aspekts. Bevorzugte Ausführungsformen des Transportsystems sind zugleich bevorzugte Ausführungsformen des Behälters, so dass zur Vermeidung von Wiederholungen für die Weiterbildung des Behälters auf die obigen Ausführungen zum ersten Aspekt verwiesen wird.

Die Erfindung betrifft in einem weiteren Aspekt die Verwendung eines Behälters gemäß dem zweiten Aspekt zum Transportieren und zur Quarantäne von Gefahrgut, insbesondere in einem System nach einer der vorstehend beschriebenen bevorzugten Ausführungsformen der ersten beiden Aspekte.

Die Verwendung macht sich dieselben Vorteile zunutze wie das Transportsystem des ersten Aspekts und der Behälter des zweiten Aspekts. Bevorzugte Ausführungsformen des Transportsystems und des Behälters sind zugleich bevorzugte Ausführungsformen der Verwendung, so dass zur Vermeidung von Wiederholungen für die Weiterbildung der Verwendung auf die obigen Ausführungen zum ersten und zum zweiten Aspekt verwiesen wird.

Die Erfindung wird für beide Aspekte nachfolgend anhand eines bevorzugten Ausführungsbeispiels unter Bezugnahme auf die beigefügten Figuren näher beschrieben. Hierbei zeigen:
- Fig. 1:: eine Ansicht eines erfindungsgemäßen Transportsystems bestehend aus einem Fahrzeug und mehreren Transport- und Quarantänebehältern;
- Fig. 2:: eine Draufsicht auf die Ladefläche des Fahrzeuges und eine mögliche Anordnung der Behälter auf der Ladefläche;
- Fig. 3:: eine Draufsicht auf die Ladefläche des Fahrzeuges mit einer alternativen Anordnung der Behälter auf der Ladefläche;
- Fig. 4:: eine Vorderansicht eines erfindungsgemäßen Behälters im geschlossenen Zustand;
- Fig. 5:: eine Seitenansicht des erfindungsgemäßen Behälters nach Fig. 4 mit geöffnetem Klappenteil im Schnitt;
- Fig.6:: eine Rückansicht des erfindungsgemäßen Behälters nach Fig. 4, und
- Fig. 7:: eine Ansicht von zwei übereinander gestapelten Behältern.

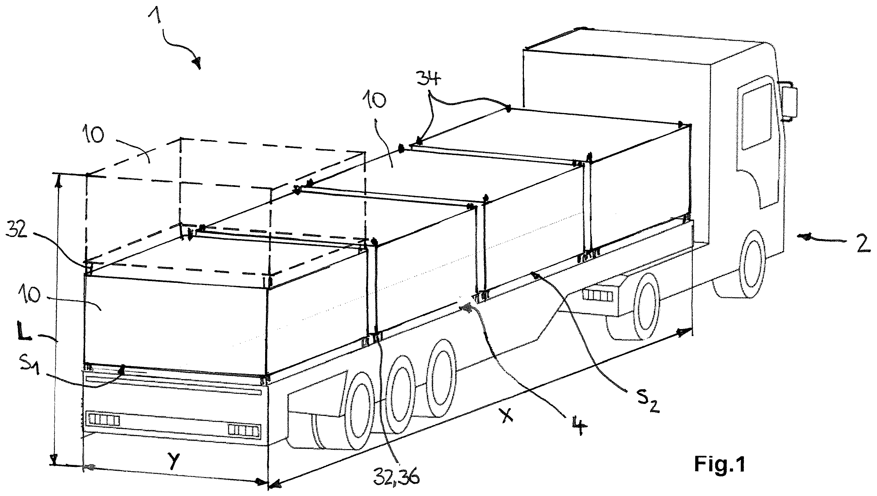

Fig. 1 zeigt ein Transportsystem 1, umfassend ein Fahrzeug 2 mit einer Ladefläche 4, welche ein Längenmaß X und ein Breitenmaß Y aufweist. Die Ladefläche 4 ist zum Aufnehmen von mehreren Transport- und Quarantänebehältern 10 in einer Ebene nebeneinander eingerichtet. Ferner umfasst das Transportsystem 1 mehrere auf der Ladefläche 4 anordenbare schematisch dargestellte Behälter 10 für Gefahrgut. Die Behälter 10, nachfolgend auch nur einfach als Behälter 10 bezeichnet, sind zum Aufnehmen von ein oder mehreren Hochvolt-Fahrzeugakkumulatoren vorgesehen.

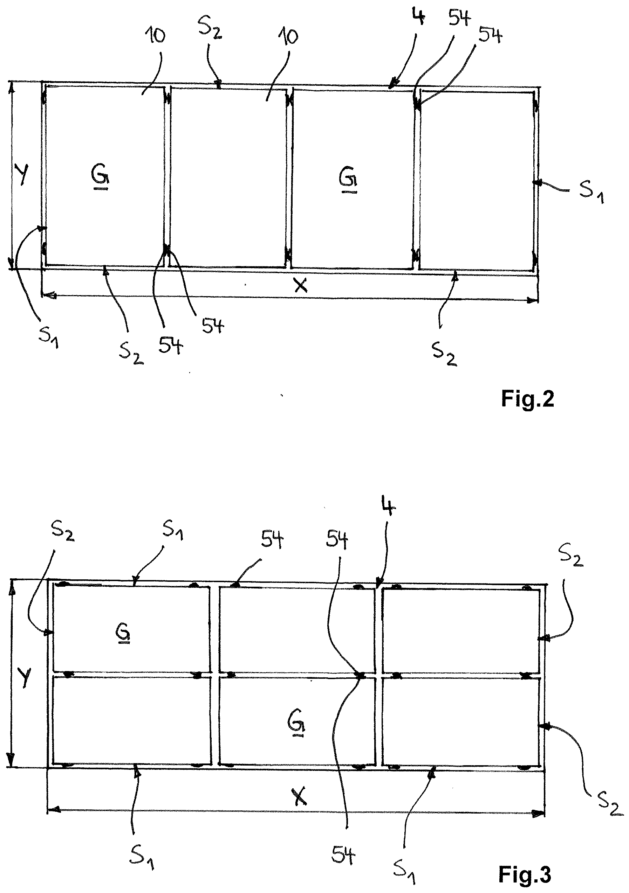

Wie Fig. 1 weiter verdeutlicht, sind die Behälter 10 einander angrenzend auf der Ladefläche 4 des Fahrzeuges 2 angeordnet, wobei die Behälter jeweils eine Grundfläche G mit einer ersten Seitenlänge S₁ und einer zweiten Seitenlänge S₂ (Fig.2, 3) aufweisen. Die erste Seitenlänge S₁ und/oder die zweite Seitenlänge S₂ entsprechen dabei einem ganzzahligen Teiler des Längenmaßes X und/oder des Breitenmaßes Y der Ladefläche 4.

Die Außenabmaße der Behälter 10 sind derart auf die Abmessungen der Ladefläche angepasst, dass die Ladefläche 4 durch die Behälter 10, in dem vorliegend gezeigten Ausführungsbeispiel vier, Behälter 10, optimal ausgenutzt ist. Die Ladefläche 4 wird mindestens zu 90%, insbesondere zu 95 %, ausgenutzt. Wie in Fig. 1 angedeutet, gestrichelt dargestellter Behältern 10, können die Behälter 10 auf der Ladefläche 4 in zwei Ebenen übereinander angeordnet sein.

Fig. 2 zeigt eine mögliche Anordnung von Behältern 10 zum Beladen der Ladefläche 4 des Fahrzeuges 2, wobei die erste Seitenlänge S₁ der Grundfläche G des Behälters 10, bezogen auf das Breitenmaß Y der Ladefläche 4, einen Teiler von 1 und die zweite Seitenlänge S₂ der Grundfläche, bezogen auf das Längenmaß der Ladefläche 4, einen Teiler von mindestens 3 aufweist. In dem vorliegenden Ausführungsbeispiel ist die zweite Seitenlänge S₂ der Grundfläche des Behälters 10 derart an das Längenmaß X der Ladefläche 4 angepasst, dass diese einem ganzzahligen Teiler von etwa vier entspricht. Damit werden, wie Fig. 2 verdeutlicht, eine Reihe von mehreren, insgesamt vier hintereinander angeordneten Behältern 10 in einer Ebene auf der Ladefläche 4 des Fahrzeuges 2 angeordnet.

Fig. 3 zeigt eine mögliche weitere Anordnung von Behältern 10 zum Beladen der Ladefläche 4 eines Fahrzeuges 2 mit Behältern 10, wobei die zweite Seitenlänge S₂ der Grundfläche G des Behälters 10, bezogen auf das Breitenmaß Y der Ladefläche, einen Teiler von 2 und die erste Seitenlänge S₁ der Grundfläche G des Behälters 10, bezogen auf das Längenmaß X der Ladefläche 4, einen Teiler von mindestens 2 oder mehr aufweist. Auf der Ladefläche 4 können zwei aneinander angrenzende Reihen von zwei oder mehr, vorliegend drei, nebeneinander angeordneten Behältern 10 in einer Ebene auf der Ladefläche 4 angeordnet werden. Die zweite Seitenlänge S₂ der Grundfläche G des Behälters 10 entspricht im Wesentlichen der Hälfte des Breitenmaßes Y der Ladefläche. Auch in der vorliegenden Ausführung ist die Ladefläche 4 zumindest zu 95 % durch die Behälter 10 ausgenutzt.

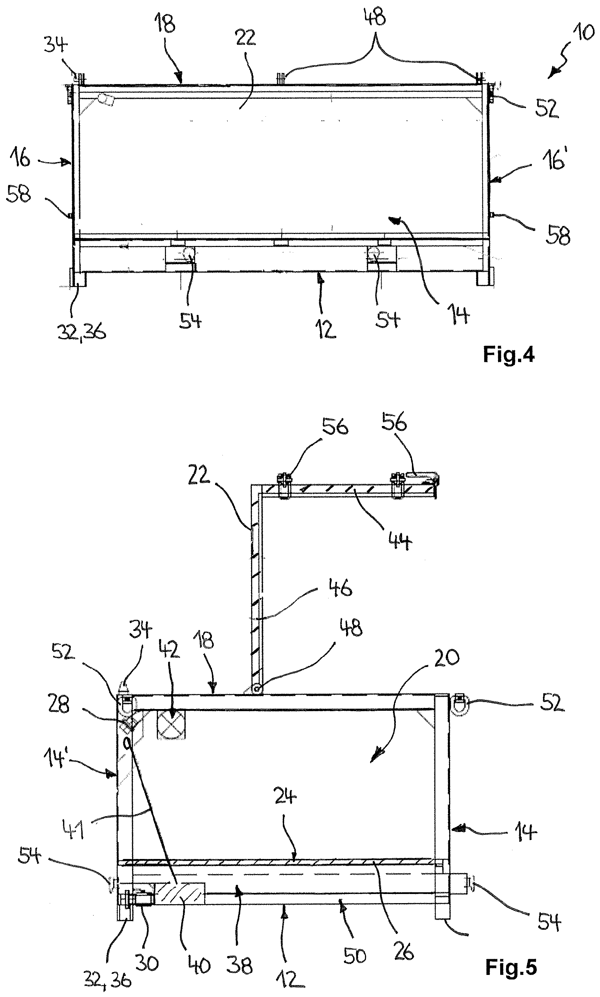

In den Fig. 4 bis 6 ist eine Ausführungsform eines erfindungsgemäßen Behälters 10 gezeigt, der einen Behälterboden 12, mehrere Seitenwände 14, 14', 16, 16' und eine Behälterdecke 18 aufweist.

Der Behälterboden 12, die Seitenwände 14 - 16' und die Behälterdecke 18 bilden einen Aufnahmeraum 20 für ein innerhalb des Behälters 10 positionierbares Gefahrgut. Der Behälter 10 weist ein bewegliches Klappenteil 22 als Zugang zum Aufnahmeraum 20 auf.

Das Klappenteil 22 ist zwischen einer Schließstellung und einer Offenstellung hin und her bewegbar. Innerhalb des Aufnahmeraumes 20 ist ein Ladeboden 24 als Aufnahmefläche für das Gefahrgut angeordnet, welcher im Abstand oberhalb des Behälterbodens 12 angeordnet ist. In der in Fig. 5 gezeigten Ausführungsform ist der Ladeboden 24 beispielhaft aus mehreren, insbesondere vier Gitterrosten 26 gebildet, welche in einer Ebene verlaufend angeordnet sind.

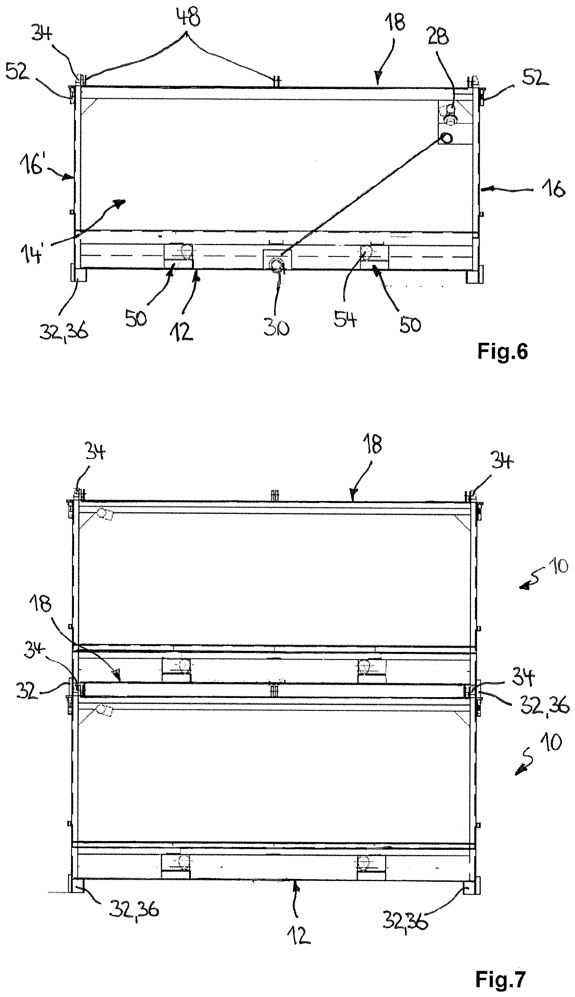

Wie ferner aus Fig. 5 und 6 ersichtlich, weist der Behälter 10 an seiner rückseitigen Seitenwand 14' einen Anschluss 28 zum Einleiten von Kühl- oder Löschmittel in den Aufnahmeraum 20 auf. Der als Einlass ausgebildete Anschluss 28 ist vorliegend etwa auf Höhe der Behälterdecke 18 angeordnet, mindestens jedoch auf halber Höhe der Seitenwand 14', sodass ein in den Aufnahmeraum 20 eingeleitetes Kühl- oder Löschmittel auf die Oberseite eines im Behälter angeordneten Gefahrgutes abgegeben werden kann.

Am Behälter 10 ist mindestens ein Anschluss 30 zum Abführen von Kühl- oder Löschmittel aus dem Aufnahmeraum 10 vorgesehen. Der als Ablass für das Kühl- und Löschmittel ausgebildete Anschluss 30 ist bodenseitig am Behälter 10 angeordnet. Der Anschluss 30 ist an der rückseitigen Seitenwand 14' des Behälters 10 angeordnet.

Die Anschlüsse 28, 30 sind in bzw. hinter die sich durch die Behälterwände 14 - 16' aufspannende Ebene zurückversetzt angeordnet. Die Anschlüsse stehen somit nicht nach außen an den Behälterwänden vor. Die Anschlüsse 28, 30 weisen zudem jeweils Storz-Kupplungen zum Anschließen von Fluidschläuchen auf.

Wie aus der Schnittdarstellung der Fig. 5 entnehmbar, ist unterhalb des Ladebodens 24 eine Auffangwanne 38 für das in den Aufnahmeraum 20 des Behälters 10 eingeleitete Kühl- oder Löschmittel ausgebildet. Die Auffangwanne 38 wird aus dem Behälterboden 12 und Abschnitten der senkrecht dazu verlaufenden Behälterwände 14 - 16' ausgebildet. Innerhalb des Behälters 10 ist ein Löschmittelreservoir 40 angeordnet, das dazu eingerichtet ist, nach Aktivierung das im Reservoir 40 befindliche Löschmittel in den Aufnahmeraum 20 abzugeben. Das Löschmittelreservoir 40 kann mit einer im Aufnahmeraum 20 angeordneten Löschdüse fluidleitend gekoppelt sein.

In einer möglichen Ausgestaltung ist das Löschmittelreservoir mittels eines im Aufnahmeraum angeordneten Sensorelementes, wie beispielsweise eines thermisch aktivierbaren Thermoelementes, aktivierbar. In der gezeigten Ausgestaltung wird das Löschmittelreservoir mittels eines Seilzugs 41 von der Außenseite des Behälters 10 aus manuell aktiviert.

Wie Fig. 5 weiter verdeutlicht, ist an der Seitenwand 16' eine öffen- und verschließbare Entlüftungsöffnung 42 vorgesehen, über die Gase aus dem Aufnahmeraum 10 des Behälters abgesaugt werden können.

Das den Zugang zum Aufnahmeraum 20 ausbildende Klappenteil 22 bildet vorliegend Wandbereiche der frontseitigen Seitenwand 14 und der Behälterdecke 18 des Behälters 10 aus. Das Klappenteil 22 wird insbesondere aus zwei senkrecht zueinander verlaufenden, starr miteinander verbundenen Plattenteilen 44, 46 ausgebildet. Das Klappenteil 22 ist in der vorliegend gezeigten Ausführungsform mittels eines parallel zur Behälterdecke und den Seitenlängen S₁ verlaufenden Schwenklager 48 aufgenommen. Das Schwenklager 48 ist auf Höhe der Behälterdecke 18 und in Tiefenrichtung des Behälters 10 auf der Hälfte der Behälterdecke ausgebildet.

An der Außenseite der Behälterwände (Behälterboden 12, Seitenwände 14 - 16', bzw. Behälterdecke 18) sind ferner ein oder mehrere Verladehilfen 50, 52, 54 zum Angreifen von Anschlag-, Lastaufnahme- oder Tragmitteln vorgesehen. Die Verladehilfe 50 ist als Staplertasche, die Verladehilfe 52 als Anschlagöse und die Verladehilfe 54 als Verladeaufnahme ausgebildet. Die seitlich abstehenden Verladehilfen 54 (Verladeaufnahme) dienen als Abstandshalter zwischen auf der Ladefläche benachbart angeordneten Transport- oder Quarantänebehältern 10.

Das Klappenteil 22 wird in der Schließposition mittels am Klappenteil 22 und zumindest der Seitenwände 16, 16' angeordneter, miteinander korrespondierender Verriegelungsmittel 56, 58 in seiner Schließstellung gehalten.

Wie Fig. 7 verdeutlicht, können zwei oder mehr Transport- oder Quarantänebehälter 10 übereinander gestapelt werden, wobei an den Behältern mehrere an Behälterboden 12 und Behälterdecke 18 angeordnete Positioniermittel 32, 34 zum Stapeln mehrerer Behälter 10 in Ebenen übereinander vorgesehen sind. In der gezeigten Ausführung stehen die Positioniermittel 32, 34 senkrecht von der durch jeweils den Behälterboden 12 und die Behälterdecke 18 aufspannenden Ebene ab.

Die Positioniermittel 32 am Behälterboden 12 können als eine mit den Positioniermitteln 34 korrespondierende Aufnahme ausgebildet sein. Die Positioniermittel 32 sind insbesondere an den am Behälterboden 12 abstehenden Aufstellfüßen 36 ausgebildet. Die Positioniermittel 34 an der Behälterdecke 18 können als in etwa senkrecht daran abstehendes Verrastteil ausgebildet sein.

Die Behälter 10 weisen eine definierte Bauhöhe H auf, dass zwei übereinander gestapelte Behälter 10 auf der Ladefläche 4 des Fahrzeuges 2 eine Ladungshöhe L haben, die im Ladezustand der Behälter 10 unterhalb der zulässigen Ladehöhe des Fahrzeuges 2 liegt.

### Bezugszeichenliste:

- 1: Transportsystem
- 2: Fahrzeug
- 4: Ladefläche
- 10: Transport- und Quarantänebehälter
- 12: Behälterboden
- 14, 14': Seitenwand
- 16, 16': Seitenwand
- 18: Behälterdecke
- 20: Aufnahmeraum
- 22: Klappenteil
- 24: Ladeboden
- 26: Gitterrost
- 28, 30: Anschluss
- 32, 34: Positioniermittel
- 36: Aufstellfuß
- 38: Auffangwanne
- 40: Löschmittelreservoir
- 41: Seilzug
- 42: Entlüftungsöffnung
- 44, 46: Plattenteil
- 48: Schwenklager
- 50, 52, 54: Verladehilfe
- 56, 58: Verriegelungsmittel
- X: Längenmaß
- Y: Breitenmaß
- G: Grundfläche
- S₁: erste Seitenlänge
- S₂: zweite Seitenlänge
- H: Höhe
- L: Ladungshöhe

## Patentansprüche

1. Transportsystem (1), umfassend
- ein Fahrzeug (2) mit einer Ladefläche (4) mit einem Längen- und Breitenmaß (X, Y) zum Aufnehmen von mehreren Transport- und Quarantänebehältern (10) in einer Ebene nebeneinander, und
- mehrere auf der Ladefläche angeordnete Transport- und Quarantänebehälter (10) für Gefahrgut, wobei die Transport- und Quarantänebehälter (10) jeweils einen Behälterboden (12), mehrere Seitenwände (14, 14', 16, 16') und eine Behälterdecke (18) aufweisen, welche einen Aufnahmeraum (20) für das Gefahrgut definieren, und wobei jeder Behälter (10) ein bewegliches Klappenteil (22) als Zugang zum Aufnahmeraum (20) aufweist,
wobei die Behälter (10) aneinander angrenzend auf der Ladefläche anordenbar sind, wobei die Behälter (10) jeweils eine Grundfläche (G) mit einer ersten und einer zweiten Seitenlänge (S₁, S₂) aufweisen, wobei die erste und/oder zweite Seitenlänge (S₁, S₂) jeweils einem ganzzahligen Teiler des Längen- und/oder Breitenmaßes (X, Y) der Ladefläche entspricht,
wobei der Behälter (10) ein oder mehrere Anschlüsse (28, 30) zum Einleiten und/oder Abführen von Kühl- oder Löschmittel in den oder aus dem Aufnahmeraum (20) aufweist,
wobei am Behälter (10) bodenseitig mindestens ein Anschluss (30) angeordnet und als Ablass für das Kühl- oder Löschmittel aus dem Behälter (10) ausgebildet ist,
**dadurch gekennzeichnet,**
**dass** der Behälter auf seiner Innenseite zumindest abschnittsweise eine thermisch isolierende und/oder feuerhemmende Auskleidung aufweist, und
wobei das Klappenteil (22)
- Wandbereiche der Behälterdecke (18) und der frontseitigen Seitenwand (14) des Behälters (10) ausbildet, und/oder
- zwei senkrecht zueinander verlaufende, starr miteinander verbundene Plattenteile (44, 46) aufweist, und vorzugsweise mittels eines parallel zur Behälterdecke (18) verlaufenden Schwenklagers (48) an selbiger angelenkt ist.

2. Transportsystem (1) nach Anspruch 1,
wobei die erste Seitenlänge (S₁) der Grundfläche (G), bezogen auf das Breitenmaß (Y) der Ladefläche (4), einen Teiler von 1 und die zweite Seitenlänge (S₂) der Grundfläche (G), bezogen auf das Längenmaß (X) der Ladefläche (4), einen Teiler von mindestens 3 aufweist, so dass auf der Ladefläche (4) eine Reihe von mehreren, vorzugsweise drei, vier oder fünf hintereinander angeordneten Behältern (10) anordenbar ist.

3. Transportsystem (1) nach Anspruch 1 oder 2,
wobei die zweite Seitenlänge (S₂) der Grundfläche, bezogen auf das Breitenmaß (Y) der Ladefläche (4), einen Teiler von 2 und die erste Seitenlänge (S₁) der Grundfläche (G), bezogen auf das Längenmaß (X) der Ladefläche (4), einen Teiler von mindestens 2 aufweist, so dass auf der Ladefläche (4) zwei aneinander angrenzende Reihen von zwei oder mehr nebeneinander angeordneten Behältern (10) anordenbar sind.

4. Transportsystem (1) nach einem der Ansprüche 1 bis 3,
wobei der Behälter (10) mehrere an Behälterboden (12) und Behälterdecke (18) angeordnete Positioniermittel (32, 34) zum Stapeln mehrerer Behälter (10) in Ebenen übereinander aufweist,
wobei vorzugsweise die Positioniermittel (34) an der Behälterdecke (18) als nach außen abstehendes Verrastteil ausgebildet sind und/oder die Positioniermittel (32) am Behälterboden (12) als mit dem Verrastteil korrespondierende Aufnahme ausgebildet sind, insbesondere an einem vom Behälterboden (12) abstehenden Fuß (36).

5. Transportsystem (1) nach einem der vorstehenden Ansprüche,
wobei oberhalb des Behälterbodens (12) zusätzlich mindestens ein Ladeboden (24) als Aufnahmefläche für das Gefahrgut im Aufnahmeraum (20) angeordnet ist, welcher vorzugsweise im Abstand zum Behälterboden (12) angeordnet ist,
wobei vorzugsweise der Ladeboden (24) aus ein oder mehreren Gitterosten (26) gebildet ist.

6. Transportsystem (1) nach einem der vorstehenden Ansprüche,
wobei der mindestens eine Anschluss (28, 30) in die Ebene einer zugeordneten Behälterwand (14') zurückversetzt angeordnet ist.

7. Transportsystem (1) nach Anspruch 6, wobei
- mindestens ein Anschluss (30) am Behälter (10), ausgehend vom Behälterboden (12), auf mindestens der halben Höhe der Seitenwand angeordnet und als Einlass für das Kühl- oder Löschmittel in den Behälter (10) ausgebildet ist.

8. Transportsystem (1) nach einem der Ansprüche 5 bis 7,
wobei unterhalb des Ladebodens eine Auffangwanne für ein/das in den Aufnahmeraum einleitbare/s Kühl- oder Löschmittel ausgebildet ist.

9. Transportsystem (1) nach einem der vorstehenden Ansprüche,
wobei am Behälter (10) zusätzlich ein Löschmittelreservoir (40) vorgesehen ist, welches fluidleitend mit einer im Aufnahmeraum (20) angeordneten Löschdüse gekoppelt ist, wobei vorzugsweise das Löschmittelreservoir (40) dazu eingerichtet ist, mittels eines im Aufnahmeraum (20) angeordneten Sensorelementes oder manuell von der Außenseite des Behälters (10) aus aktiviert zu werden.

10. Transportsystem (1) nach einem der vorstehenden Ansprüche,
wobei an der Außenseite der Behälterwände (14, 14', 16, 16') ein oder mehrere Verladehilfen (50, 52, 54) zum Angreifen von Anschlag-, Lastaufnahme- oder Tragmitteln vorgesehen sind, welche als Staplertaschen, Anschlagösen oder Verladeaufnahmen ausgebildet sind.

11. Transportsystem (1) nach einem der vorstehenden Ansprüche,
wobei mindestens eine der Seitenwände (14, 14', 16, 16') eine öffen- und verschließbare Entlüftungsöffnung (42) aufweist.

12. Transportsystem (1) nach einem der vorstehenden Ansprüche,
wobei der Behälter eine definierte Bauhöhe (H) aufweist, sodass zwei auf einer Ladefläche (4) des Fahrzeuges (2) übereinander gestapelte Behälter (10) eine Ladungshöhe (L) haben, die im Verladezustand der Behälter (10) unterhalb der zulässigen Ladehöhe des Fahrzeuges (2) liegt.

13. Transport- und Quarantänebehälter (10) für ein Transportsystem (1) nach einem der vorstehenden Ansprüche,
wobei das System ein Fahrzeug (2) mit einer Ladefläche (4) mit einem Längen- und Breitenmaß (X, Y) aufweist, und der Behälter (10)
einen Behälterboden (12), mehrere Seitenwände (14, 14', 16, 16') und eine Behälterdecke (18) aufweist, welche einen Aufnahmeraum (20) für das Gefahrgut definieren, und
wobei der Behälter (10) ein bewegliches Klappenteil (22) als Zugang zum Aufnahmeraum (20) aufweist,
wobei der Behälter (10) dazu eingerichtet ist, mit weiteren baugleichen Behältern aneinander angrenzend auf einer Ladefläche angeordnet zu werden, wobei die Behälter (10) jeweils eine Grundfläche (G) mit einer ersten und einer zweiten Seitenlänge (S₁, S₂) aufweisen, wobei die erste und/oder zweite Seitenlänge (S₁, S₂) jeweils einem ganzzahligen Teiler des Längen- und/oder Breitenmaßes (X, Y) der Ladefläche entspricht,
**dadurch gekennzeichnet, dass** der Behälter (10) auf seiner Innenseite zumindest abschnittsweise eine thermisch isolierende und/oder feuerhemmende Auskleidung aufweist, wobei der Behälter (10) ein oder mehrere Anschlüsse (28, 30) zum Einleiten und/oder Abführen von Kühl- oder Löschmittel in den oder aus dem Aufnahmeraum (20) aufweist, wobei am Behälter (10) bodenseitig mindestens ein Anschluss (30) angeordnet und als Ablass für das Kühl- oder Löschmittel aus dem Behälter (10) ausgebildet ist, und
wobei das Klappenteil (22)
- Wandbereiche der Behälterdecke (18) und der frontseitigen Seitenwand (14) des Behälters (10) ausbildet, und/oder
- zwei senkrecht zueinander verlaufende, starr miteinander verbundene Plattenteile (44, 46) aufweist, und vorzugsweise mittels eines parallel zur Behälterdecke (18) verlaufenden Schwenklagers (48) an selbiger angelenkt ist.

14. Verwendung eines Behälters nach Anspruch 13 zum Transportieren und zur Quarantäne von Gefahrgut, insbesondere in einem System nach einem der vorstehenden Ansprüche 1 bis 12.

## Claims

1. Transport system (1), comprising
- a vehicle (2) having a loading area (4) with a length dimension and a width dimension (X, Y) for receiving a plurality of transport and quarantine containers (10) next to one another in one plane, and
- a plurality of transport and quarantine containers (10) for hazardous goods arranged on the loading area, wherein the transport and quarantine containers (10) each have a container base (12), a plurality of side walls (14, 14', 16, 16') and a container top (18), which define a receiving space (20) for the hazardous goods, and wherein each container (10) has a movable flap part (22) as an access to the receiving space (20), wherein the containers (10) are arrangeable adjacent to one another on the loading area, wherein the containers (10) each have a base area (G) with a first and a second side length (S1, S2), wherein the first and/or second side length (S1, S2) each corresponds to an integer divisor of the length dimension and/or the width dimension (X, Y) of the loading area, wherein the container (10) has one or more connections (28, 30) for introducing and/or discharging coolant or extinguishing agent into or out of the receiving space (20), wherein at least one connection (30) is arranged at the bottom of the container (10) and is designed as a drain for the coolant or extinguishing agent from the container (10),
**characterized in that** the container (10) has, on its inner side, at least in sections, a thermally insulating and/or fire-retardant lining,
wherein the flap part (22)
- forms wall regions of the container top (18) and the front-side side wall (14) of the container (10), and/or
- has two rigidly interconnected plate parts (44, 46) running perpendicular to one another, and is preferably hinged to the container top (18) by means of a pivot bearing (48) running parallel thereto.

2. Transport system (1) according to claim 1, wherein the first side length (S1) of the base area (G), relative to the width dimension (Y) of the loading area (4), has a divisor of 1 and the second side length (S2) of the base area (G), relative to the length dimension (X) of the loading area (4), has a divisor of at least 3, such that a row of a plurality of, preferably three, four or five containers (10) arranged one behind the other can be arranged on the loading area (4).

3. Transport system (1) according to claim 1 or 2, wherein the second side length (S2) of the base area, relative to the width dimension (Y) of the loading area (4), has a divisor of 2 and the first side length (S1) of the base area (G), relative to the length dimension (X) of the loading area (4), has a divisor of at least 2, such that two adjacent rows of two or more containers (10) arranged next to one another can be arranged on the loading area (4).

4. Transport system (1) according to one of claims 1 to 3, wherein the container (10) has a plurality of positioning means (32, 34) arranged on the container base (12) and the container top (18) for stacking a plurality of containers (10) in planes one above the other, wherein preferably the positioning means (34) on the container top (18) are designed as an outwardly protruding latching part and/or the positioning means (32) on the container base (12) are designed as a receptacle corresponding to the latching part, in particular on a foot (36) protruding from the container base (12).

5. Transport system (1) according to one of the preceding claims, wherein above the container base (12) at least one load floor (24) is additionally arranged as a receiving surface for the hazardous goods in the receiving space (20), which is preferably arranged at a distance from the container base (12), wherein preferably the load floor (24) is formed from one or more gratings (26).

6. Transport system (1) according to one of the preceding claims, wherein the at least one connection (28, 30) is arranged set back into the plane of an associated container wall (14').

7. Transport system (1) according to claim 6, wherein at least one connection (30) on the container (10) is arranged, starting from the container base (12), at least at half the height of the side wall and is designed as an inlet for the coolant or extinguishing agent into the container (10).

8. Transport system (1) according to one of claims 5 to 7, wherein a collecting tray for a/the coolant or extinguishing agent introducible into the receiving space is formed below the load floor.

9. Transport system (1) according to one of the preceding claims, wherein an extinguishing agent reservoir (40) is additionally provided on the container (10), which is fluidly coupled to an extinguishing nozzle arranged in the receiving space (20), wherein preferably the extinguishing agent reservoir (40) is configured to be activated by means of a sensor element arranged in the receiving space (20) or manually from the outside of the container (10).

10. Transport system (1) according to one of the preceding claims, wherein on the outer side of the container walls (14, 14', 16, 16') one or more loading aids (50, 52, 54) are provided for engaging attachment, load-bearing or carrying means, which are designed as forklift pockets, lifting eyes or loading receptacles.

11. Transport system (1) according to one of the preceding claims, wherein at least one of the side walls (14, 14', 16, 16') has an openable and closable vent opening (42).

12. Transport system (1) according to one of the preceding claims, wherein the container has a defined height (H), such that two containers (10) stacked one above the other on a loading area (4) of the vehicle (2) have a load height (L) which, in the loaded state of the containers (10), is below the permissible loading height of the vehicle (2).

13. Transport and quarantine container (10) for a transport system (1) according to one of the preceding claims, wherein the system has a vehicle (2) with a loading area (4) having a length dimension and a width dimension (X, Y), and the container (10) has a container base (12), a plurality of side walls (14, 14', 16, 16') and a container top (18), which define a receiving space (20) for the hazardous goods, and wherein the container (10) has a movable flap part (22) as an access to the receiving space (20), wherein the container (10) is configured to be arranged adjacent to further structurally identical containers on a loading area, wherein the containers (10) each have a base area (G) with a first and a second side length (S1, S2), wherein the first and/or second side length (S1, S2) each corresponds to an integer divisor of the length dimension and/or the width dimension (X, Y) of the loading area, **characterized in that** the container (10) has, on its inner side, at least in sections, a thermally insulating and/or fire-retardant lining, wherein the container (10) has one or more connections (28, 30) for introducing and/or discharging coolant or extinguishing agent into or out of the receiving space (20), wherein at least one connection (30) is arranged at the bottom of the container (10) and is designed as a drain for the coolant or extinguishing agent from the container (10), and wherein the flap part (22)
- forms wall regions of the container top (18) and the front-side side wall (14) of the container (10), and/or
- has two rigidly interconnected plate parts (44, 46) running perpendicular to one another, and is preferably hinged to the container top (18) by means of a pivot bearing (48) running parallel thereto.

14. Use of a container according to claim 13 for transporting and quarantining hazardous goods, in particular in a system according to one of the preceding claims 1 to 12.

## Revendications

1. Système de transport (1), comprenant
- un véhicule (2) avec une surface de chargement (4) avec une mesure de longueur et une mesure de largeur (X, Y) pour recevoir plusieurs conteneurs de transport et de quarantaine (10) dans un même plan l'un à côté de l'autre, et
- plusieurs conteneurs de transport et de quarantaine (10) pour marchandise dangereuse disposés sur la surface de chargement, dans lequel les conteneurs de transport et de quarantaine (10) présentent chacun un fond de conteneur (12), plusieurs parois latérales (14, 14', 16, 16') et un plafond de conteneur (18) qui définissent un espace de réception (20) pour la marchandise dangereuse, et dans lequel chaque conteneur (10) présente une partie de clapet (22) mobile en tant qu'accès à l'espace de réception (20),
dans lequel les conteneurs (10) peuvent être disposés de manière adjacente les uns aux autres sur la surface de chargement, dans lequel les conteneurs (10) présentent chacun une surface de base (G) avec une première et une seconde longueur latérale (S₁, S₂), dans lequel la première et/ou seconde longueur latérale (S₁, S₂) correspond chacune à un diviseur entier de la mesure de longueur et/ou de largeur (X, Y) de la surface de chargement,
dans lequel le conteneur (10) présente un ou plusieurs raccordements (28, 30) pour l'introduction et/ou l'évacuation d'agent réfrigérant ou extincteur dans ou hors de l'espace de réception (20), dans lequel au moins un raccordement (30) est disposé côté fond sur le conteneur (10) et réalisé en tant que vidange pour l'agent réfrigérant ou extincteur à partir du conteneur (10),
**caractérisé en ce**
**que** le conteneur présente sur sa face intérieure, au moins sur certaines sections, un revêtement isolant thermiquement et/ou ignifuge, et
dans lequel la partie de clapet (22)
- réalise des zones de paroi du plafond de conteneur (18) et de la paroi latérale (14) sur la face avant du conteneur (10), et/ou
- présente deux parties de plaque (44, 46) s'étendant perpendiculairement l'une à l'autre, reliées rigidement l'une à l'autre, et est de préférence articulée au moyen d'un palier pivotant (48) s'étendant parallèlement au plafond de conteneur (18) sur celui-ci.

2. Système de transport (1) selon la revendication 1,
dans lequel la première longueur latérale (S₁) de la surface de base (G), par rapport à la mesure de largeur (Y) de la surface de chargement (4), présente un diviseur de 1 et la seconde longueur latérale (S₂) de la surface de base (G), par rapport à la mesure de longueur (X) de la surface de chargement (4), présente un diviseur d'au moins 3, de sorte qu'une rangée de plusieurs, de préférence trois, quatre ou cinq conteneurs (10) disposés les uns derrière les autres puisse être disposée sur la surface de chargement (4).

3. Système de transport (1) selon la revendication 1 ou 2,
dans lequel la seconde longueur latérale (S₂) de la surface de base, par rapport à la mesure de largeur (Y) de la surface de chargement (4), présente un diviseur de 2 et la première longueur latérale (S₁) de la surface de base (G), par rapport à la mesure de longueur (X) de la surface de chargement (4), présente un diviseur d'au moins 2, de sorte que deux rangées adjacentes de deux conteneurs (10) ou plus disposés l'un à côté de l'autre peuvent être disposées sur la surface de chargement (4).

4. Système de transport (1) selon l'une quelconque des revendications 1 à 3,
dans lequel le conteneur (10) présente plusieurs moyens de positionnement (32, 34) disposés sur le fond de conteneur (12) et le plafond de conteneur (18) pour empiler plusieurs conteneurs (10) dans des plans les uns au-dessus des autres,
dans lequel les moyens de positionnement (34) sont de préférence réalisés sur le plafond de conteneur (18) en tant que pièce d'encliquetage faisant saillie vers l'extérieur et/ou les moyens de positionnement (32) sont réalisés sur le fond de conteneur (12) en tant que logement correspondant à la pièce d'encliquetage, en particulier sur un pied (36) faisant saillie du fond de conteneur (12).

5. Système de transport (1) selon l'une quelconque des revendications précédentes,
dans lequel au moins un plancher de chargement (24) est disposé en outre au-dessus du plancher de conteneur (12) en tant que surface de réception pour la marchandise dangereuse dans l'espace de réception (20), lequel est disposé de préférence à distance du plancher de conteneur (12),
dans lequel le plancher de chargement (24) est de préférence formé d'un ou plusieurs caillebottis (26).

6. Système de transport (1) selon l'une quelconque des revendications précédentes,
dans lequel l'au moins un raccordement (28, 30) est disposé décalé vers l'arrière dans le plan d'une paroi de conteneur (14') associée.

7. Système de transport (1) selon la revendication 6, dans lequel
- au moins un raccordement (30) sur le conteneur (10), en partant du fond de conteneur (12), est disposé à au moins la moitié de la hauteur de la paroi latérale et réalisé en tant qu'entrée pour l'agent réfrigérant ou extincteur dans le conteneur (10).

8. Système de transport (1) selon l'une quelconque des revendications 5 à 7,
dans lequel une cuve de récupération pour un/l'agent réfrigérant ou extincteur pouvant être introduit dans l'espace de réception est réalisée sous le plancher de chargement.

9. Système de transport (1) selon l'une quelconque des revendications précédentes,
dans lequel un réservoir d'agent extincteur (40), lequel est couplé fluidiquement à une buse d'extinction disposée dans l'espace de réception (20), est en outre prévu sur le conteneur (10),
dans lequel le réservoir d'agent extincteur (40) est de préférence configuré pour être activé au moyen d'un élément capteur disposé dans l'espace de réception (20) ou manuellement depuis la face extérieure du conteneur (10).

10. Système de transport (1) selon l'une quelconque des revendications précédentes,
dans lequel un ou plusieurs auxiliaires de chargement (50, 52, 54) pour exercer une action sur des moyens d'élingage, de réception de charge ou porteurs, qui sont réalisés en tant que fourreaux pour chariot élévateur, anneaux d'élingage ou supports de chargement, sont prévus sur la face extérieure des parois de conteneur (14, 14', 16, 16').

11. Système de transport (1) selon l'une quelconque des revendications précédentes,
dans lequel au moins l'une des parois latérales (14, 14', 16, 16') présente une ouverture de ventilation (42) pouvant être ouverte et fermée.

12. Système de transport (1) selon l'une quelconque des revendications précédentes,
dans lequel le conteneur présente une hauteur de construction (H) définie, de sorte que deux conteneurs (10) empilés l'un sur l'autre sur une surface de chargement (4) du véhicule (2) ont une hauteur de chargement (L) qui, dans l'état de chargement des conteneurs (10), est inférieure à la hauteur de chargement admissible du véhicule (2).

13. Conteneur de transport et de quarantaine (10) pour un système de transport (1) selon l'une quelconque des revendications précédentes,
dans lequel le système présente un véhicule (2) avec une surface de chargement (4) avec une mesure de longueur et de largeur (X, Y), et le conteneur (10)
présente un fond de conteneur (12), plusieurs parois latérales (14, 14', 16, 16') et un plafond de conteneur (18) qui définissent un espace de réception (20) pour la marchandise dangereuse, et
dans lequel le conteneur (10) présente une partie de clapet (22) mobile en tant qu'accès à l'espace de réception (20),
dans lequel le conteneur (10) est configuré pour être disposé avec d'autres conteneurs de construction identique, adjacents les uns aux autres sur une surface de chargement, dans lequel les conteneurs (10) présentent chacun une surface de base (G) avec une première et une seconde longueur latérale (S₁, S₂), dans lequel la première et/ou seconde longueur latérale (S₁, S₂) correspond chacune à un diviseur entier de la mesure de longueur et/ou de largeur (X, Y) de la surface de chargement,
**caractérisé en ce que** le conteneur (10) présente sur sa face intérieure, au moins sur certaines sections, un revêtement isolant thermiquement et/ou ignifuge,
dans lequel le conteneur (10) présente un ou plusieurs raccordements (28, 30) pour l'introduction et/ou l'évacuation d'agents réfrigérants ou extincteurs dans ou hors de l'espace de réception (20),
dans lequel au moins un raccordement (30) est disposé côté fond sur le conteneur (10) et réalisé en tant que vidange pour l'agent réfrigérant ou extincteur à partir du conteneur (10), et
dans lequel la partie de clapet (22)
- réalise des zones de paroi du plafond de conteneur (18) et de la paroi latérale (14) sur la face avant du conteneur (10), et/ou
- présente deux parties de plaque (44, 46) s'étendant perpendiculairement l'une à l'autre, reliées rigidement l'une à l'autre, et est de préférence articulée au moyen d'un palier pivotant (48) s'étendant parallèlement au plafond de conteneur (18) sur celui-ci.

14. Utilisation d'un conteneur selon la revendication 13 pour transporter et mettre en quarantaine une marchandise dangereuse, en particulier dans un système selon l'une quelconque des revendications 1 à 12 précédentes.
